# EUROPÄISCHE PATENTSCHRIFT

(11) **EP 3 017 716 B1**
(45) Veröffentlichungstag und Bekanntmachung des Hinweises auf die Patenterteilung: **28.12.2016**
(21) Anmeldenummer: 14191872.2
(22) Anmeldetag: 05.11.2014
(51) Int. Cl.: A45C 13/30, A45F 3/12, A45F 3/14

(54) **Stoßdämpferelement für Trageriemen**
Shock absorber element for carrying straps
Élément amortisseur pour courroie de support

(43) Veröffentlichungstag der Anmeldung: 11.05.2016
(73) Patentinhaber: Geller, Wolfgang-Peter, 21376 Garlstorf (DE)
(72) Erfinder: Geller, Wolfgang-Peter, 21376 Garlstorf (DE)
(74) Vertreter: Raffay & Fleck

(56) Entgegenhaltungen:
- WO-A2-2012/145639
- JP-A- 2008 079 952
- US-A1- 2003 056 338
- US-A1- 2005 258 205

## Beschreibung

Die Erfindung betrifft ein in einer Längsrichtung wirksames Stoßdämpferelement für Trageriemen mit einem flexiblen, flachen, zwei einander gegenüberliegende Hauptflächen aufweisenden, in einer Gurtlängsrichtung verlaufenden Gurtabschnitt, der in der Gurtlängsrichtung in quer zu der Längsrichtung ausgelenkten Wellenlinien mit Umkehrpunkten und zwischen den Umkehrpunkten verlaufenden Querabschnitten verläuft, und mit einer auf wenigstens eine der Hauptflächen des Gurtabschnittes aufgebrachten, mit dem Gurtabschnitt fest verbundenen, den Gurtabschnitt in einer Normalposition in den Wellenlinien haltenden Auflage aus einem elastischem Material. Die Erfindung betrifft ferner einen Trageriemen mit einem solchen Stoßdämpferelement.

Es ist bekannt, zum Tragen schwerer Gegenstände Trageriemen, insbesondere Schulter- oder Halsriemen zu verwenden. Entsprechende Trageriemen werden beispielsweise für Tragetaschen, Gewehre oder dgl. eingesetzt. Im Besonderen finden derartige Trageriemen auch für das Transportieren von Foto- und Filmkameras, als sogenannte Kameratrageriemen, Verwendung. Hierbei hat sich insbesondere eine Trageriemengestalt etabliert, bei der ein entsprechender Trageriemen als Schlaufe über eine Schulter und quer über den Leib getragen wird und an dieser Schlaufe eine Kamera an einem über die Trageriemenschlaufe frei verschiebbaren Anschlussadapter befestigt ist, welche Kamera in einer Ruheposition in etwa auf Hüfthöhe der den Trageriemen verwendenden Position herabhängt.

Diese Art des Kameratrageriemens ist z.B. in der US 2008/0292303 A1 beschrieben.

Es ist ferner bekannt, dass das Tragen schwerer Gegenstände an solchen Trageriemen insbesondere dann für die tragende Person unangenehm sein kann, wenn, z.B. durch die Auf- und Abbewegung beim Gehen, impulsartige Zuglasten auf dem Riemen auftreten, die ohne Abfederung auf die Schulter oder den Hals der den Trageriemen verwendenden Person übertragen werden und dort ruckartig hohe Kräfte auf den Riemen aufbringen und ein unangenehmes Tragegefühl verursachen. Um diesem Problem zu begegnen, sind bereits seit langem Stoßdämpferelemente bekannt, die in die Trageriemen integriert bzw. mit diesen verbunden werden, um so die auftretenden Stöße abzufedern und somit den Tragekomfort für den den mit entsprechendem Stoßdämpferelement ausgestatteten Trageriemen benutzenden Anwender zu verbessern.

Aus der US 279,706 ist z.B. ein Trageriemen bekannt, der einen einen Stoßdämpfer bildenden Abschnitt aus einem Gummi oder anderem elastischem Material aufweist und daran festgelegt einen Tragehaken. Dieser Trageriemen der US 279,706 ist als Tragehilfe für Sargträger gedacht und beschrieben.

Ähnlich gebildete Stoßdämpferelemente für Tragegurte, die an ihren Enden mit Haken und Ösen versehen sind, um diese wahlweise in ein Tragegurtsystem einbinden oder von diesem lösen zu können, sind in der US 2007/0261213 A1 gezeigt. Auch dort sind die Stoßdämpferelemente gebildet durch flache bandartige Abschnitte aus einem elastischen Material, wobei ein Abfangdraht bzw. Abfangseil, beispielsweise aus Metall, vorgesehen sein kann, welches in Bögen geführt den elastischen Bandabschnitt überspannen und somit als Dehnungsbremse dienen kann, um auf diese Weise ein Überdehnen oder gar Zerreißen dieses elastischen Abschnittes zu verhindern.

Eine andere Art eines Stoßdämpferelementes ist in der US 4,976,388 gezeigt. Dort ist ein Abschnitt eines Bandstranges aus einem dehnbaren Material mit einem in Bögen geführten, mit dem dehnbaren Material in Abschnitten zwischen den Bögen fest verbundenen starren Gurtmaterial verbunden, so dass eine elastische Längserstreckung und damit ein stoßdämpfender Effekt zu einem gewissen Grad durch Dehnen der elastischen Abschnitte erfolgen kann, bis hin zu einem Zustand, in dem auch die zunächst in Bögen geführten nicht elastischen Gurtabschnitte gerade gestreckt und gespannt sind und eine weitere Dehnung verhindern.

Ein Stoßdämpferelement für Trageriemen, welches die Merkmale des Oberbegriffes des Anspruches 1 erfüllt, ist z.B. in der FR 2781349 beschrieben. Dort gezeigt ist ein Element, bei dem ein flexibler Trageriemen in einem Gurtabschnitt in einer quer zu der Längsrichtung dieses Gurtabschnittes verlaufenden Wellenstruktur gelegt und mit einer Auflage aus einem elastischen Material versehen ist. Auf der konkaven Innenseite der jeweiligen Umkehrungen der Wellenformen sind Überbrückungsstege aus dem elastischen Material aufgebracht, die eine Rückstellkraft aufbringen entgegen einer durch eine auf dem Trageriemen lastende Kraft wirkende Streckkraft. Die Auflage aus dem elastischen Material bildet hier zusammen mit der durch diese Auflage in einer Ruheposition erzwungenen gewellten Stellung des Riemens das Stoßdämpferelement. Ein vergleichbares Stoßdämpferelement, welches mit dem wie in der FR 2781349 beschriebenen Gestalt und Wirkweise funktioniert, ist in der US 2005/0258205 A1 beschrieben. Im Unterschied zu dem Aufbau des in der vorstehend genannten französischen Druckschrift beschriebenen Stoßdämpferelementes ist die Auflage aus dem elastischen Material, die den Gurtabschnitt in dem Stoßdämpferelement in Wellen hält, nicht durchgehend über die Hauptoberflächen des Gurtabschnittes gelegt, sondern lediglich in Parallel- und in Längsrichtung des Gurtabschnittes geführten Bahnen, zwischen denen die in Wellen gelegten Hauptflächen des Gurtabschnittes in dem Stoßdämpferelement sichtbar sind.

Grundsätzlich haben sich die vorbekannten Stoßdämpferelemente, insbesondere diejenigen nach der FR 2781349 und nach der US 2005/0258205 A1, als wirksam und für den Einsatz im Zusammenhang mit Trageriemen geeignet gezeigt. Sie haben durch die Wellenform des Gurtabschnittes einen großen in Längsrichtung des Gurtabschnittes möglichen Ausschlag bzw. Hub, können durch die Wahl des Materials und der Stärke der Auflage aus dem elastischen Material mit unterschiedlichen Rückstellkräften eingestellt und somit auf unterschiedliche an dem mit diesem Stoßdämpferelement ausgerüsteten Trageriemen zu befestigende Gewichte angepasst werden.

Allerdings sind für die vorbekannten Lösungen bedingt durch die oben beschriebene Konstruktion, im Besonderen durch die gleichbleibende und im Wesentlichen einheitliche Dicke der Auflage aus dem elastischen Material, die optimalen Stoßdämpfungseigenschaften nur für an dem Trageriemen zu befestigendes Gewicht in einem eng begrenzten Spektrum gegeben. Dies ist dann, wenn mit den Trageriemen Gegenstände einer vorgegebenen Last transportiert werden sollen, ohne weitere Bedeutung, zeigt sich aber dann als kritisch, wenn an einem mit dem Stoßdämpferelement ausgestatteten Trageriemen Gegenstände mit ganz unterschiedlichen Gewichten und entsprechenden Anforderungen an die Rückstellkräften des Stoßdämpferelementes befestigt werden sollen. Eine solche Situation ergibt sich beispielsweise, wenn ein Stoßdämpferelement dieser Bauart in einen Kameratrageriemen integriert werden soll, wie er in der US 2008/0292303 A1 offenbart und beschrieben ist. Denn die an einem solchen Trageriemen zu befestigenden Foto- oder Filmkameras können ganz unterschiedliche Gewichte aufweisen. Sie können - als kleine Kompaktkameras - lediglich um die 100 g wiegen, können - als Spiegelreflexkameras mit schweren daran angeordneten Teleobjektiven - aber auch weit über 5 kg wiegen. Über eine solche Gewichtsspanne eine optimale Stoßdämpfungswirkung zu erzielen, die gerade bei an dem Trageriemen befestigten Kameras nicht lediglich für einen besseren Tragekomfort sorgt, sondern auch die empfindlichen Geräte vor durch Stöße auftretenden Erschütterungen und dadurch verursachten Beschädigungen schützt, ist mit den oben in Bezug genommenen vorbekannten Stoßdämpferelementen der gattungsgemäßen Art nicht oder nur sehr unzureichend möglich.

Hier soll also mit der Erfindung angesetzt werden, indem eine Verbesserung der Stoßdämpferelemente der eingangs genannten Art geschaffen wird, die aufgrund ihrer konstruktiven Gestaltung einen guten Stoßdämpfungseffekt über eine breite Spanne von anliegender Zugkraft (also einem an dem Gurtabschnitt angreifenden Gewicht) gewährleistet.

Diese Aufgabe wird erfindungsgemäß gelöst durch ein in eine Längsrichtung wirksames Stoßdämpferelement für Trageriemen mit den Merkmalen des Anspruches 1. Vorteilhafte Weiterbildungen eines solchen Stoßdämpferelementes werden in den Ansprüchen 2 bis 10 vorgeschlagen und gekennzeichnet. In einem weiteren Aspekt wird mit der Erfindung auch ein Trageriemen angegeben, der ein erfindungsgemäßes Stoßdämpferelement aufweist (Anspruch 11). Vorteilhafte Weiterbildungen eines solchen Trageriemens sind ebenfalls angegeben, dies in den abhängigen Ansprüchen 12 und 13.

Erfindungsgemäß weist ein in einer Längsrichtung wirksames Stoßdämpferelement für Trageriemen zunächst einmal einen flexiblen Gurtabschnitt auf, der in eine Gurtlängsrichtung verläuft. Dieser Gurtabschnitt ist flach und hat zwei einander gegenüberliegende Hauptflächen. Der Gurtabschnitt des Stoßdämpferelementes ist in der Gurtlängsrichtung in quer zu der Längsrichtung ausgelenkten Wellenlinien geformt. Diese Wellenlinien weisen Umkehrpunkte und zwischen den Umkehrpunkten verlaufende Querabschnitte auf. Desweiteren ist auf wenigstens eine der Hauptflächen des Gurtabschnittes im Bereich der Wellenlinien eine Auflage aus einem elastischen Material aufgebracht und mit dem Gurtabschnitt fest verbunden. Diese Auflage aus dem elastischen Material hält den Gurtabschnitt in einer Normalposition in den Wellenlinien. Insoweit gleicht das erfindungsgemäße Stoßdämpferelement noch dem aus dem Stand der Technik bekannten Element gemäß der US 2005/0258205 A1 und der FR 2781349.

Gegenüber diesen vorbekannten Stoßdämpferelementen ist das erfindungsgemäße Stoßdämpferelement allerdings dahingehend anders gebildet und zeichnet sich dadurch aus, dass die Auflage aus dem elastischen Material im Verlauf der Wellenlinien eine variierende Dicke aufweist, wobei auf den Querabschnitten des Gurtabschnittes in einem mittleren Abschnitt die Auflage die geringste Dicke aufweist und ausgehend von dem mittleren Abschnitt hin zu den Umkehrpunkten in ihrer Dicke ansteigt, schließlich die Auflage in den Umkehrpunkten am dicksten gebildet ist.

Durch diese Ausgestaltung der Auflage mit variierender Dicke, die ausgehend von einem mittleren Abschnitt des Querabschnittes des in Wellen gelegten Gurtabschnittes zu dem Umkehrpunkten hin ansteigt und in den Umkehrpunkten die größte Dicke aufweist, wird abhängig von der in Längsrichtung des Stoßdämpferelementes anliegenden Zugkraft, also abhängig von einem mit einem mit dem Stoßdämpferelement versehenen Trageriemen getragenen Gewicht, eine Auslenkung des Stoßdämpferelementes an den unterschiedlichen Positionen bzw. Abschnitten, bewirkt. Zunächst wird bei nur geringem Gewicht, bzw. aufgrund einer geringen Zugbelastung aufgrund eines Stoßes das Stoßdämpferelement in den mittleren Abschnitten der Querabschnitte, also dort, wo die Auflage aus dem elastischen Material am dünnsten ist, ausgelenkt. Da diese Querabschnitte schräg bzw. quer zu der Längsrichtung, in der das Stoßdämpferelement wirksam ist, verlaufen, kommt es in diesen Bereichen zu einer elastischen Verformung und dadurch zu einer Verlängerung des Stoßdämpferelementes in seiner Längsrichtung und so zu einer stoßdämpfenden Wirkung in dieser Richtung. Ist der stoßdämpfende Effekt in diesen Bereichen ausgeschöpft, ist also das Stoßdämpferelement in den mittleren Abschnitten der Querabschnitte ausgelenkt, werden die weiter zu den Umkehrpunkten gelegenen, in der Dicke der Auflage ansteigenden Abschnitte beansprucht und ausgelenkt, wo aufgrund des dickeren Materials der elastischen Auflage eine größere Kraft für die Auslenkung erforderlich ist und somit auch eine größere Rückstellkraft gegeben ist. Diese Beanspruchung kann aber auch schon parallel zu einer weiteren Auslenkung des Stoßdämpferelementes in den mittleren Abschnitten erfolgen. Diese Abschnitte mit ansteigender Dicke des Materials der Auflage verformen also bei höheren Gewichtskräften bzw. bei höheren Auslenkungskräften aufgrund von Stößen. Wenn auch diese Abschnitte bzw. die Rückstellwirkung aus diesen Abschnitten heraus vollständig oder jedenfalls zu einem guten Teil ausgeschöpft sind, kommt es zu einer Auslenkung durch ein Aufweiten bzw. Umbiegen an den Umkehrpunkten, in denen die Dicke der Auflage des elastischen Materials am stärksten ist, also auch die größte Rückstellkraft gegeben ist, bzw. für eine entsprechende Auslenkung ein entsprechendes hohes Gewicht bzw. eine entsprechend hohe Auslenkkraft anliegen muss.

Entsprechend können also über eine breite Spanne von anliegenden Auslenkkräften Stöße abgefangen werden, kann ein erfindungsgemäßes Stoßdämpferelement für anlastende Gewichte in einer großen Spanne eine ausreichende Stoßdämpfungswirkung entfalten, mit entsprechender Gestaltung der Auflage und der variierenden Stärke und der Anzahl der Wellen des Stoßdämpferelementes z.B. Gewichte in einer Spanne von etwa 100 g bis über 5 kg, wenn das erfindungsgemäße Stoßdämpferelement beispielsweise in einem Kameratrageriemen verwendet bzw. integriert wird.

Das Material des Gurtabschnittes kann dabei selbst eine gewisse Elastizität und damit Möglichkeit einer elastischen Dehnung, insbesondere in der Gurtlängsrichtung, aufweisen, muss dies jedoch nicht. Es genügt hier, wenn das Material des Gurtabschnittes flexibel und eben nicht elastisch verformbar ist.

Gemäß einer vorteilhaften Weiterbildung der Erfindung kann die Auflage aus dem elastischen Material aus einem Polymer gebildet sein. Polymere sind Materialien mit besonders guten und im Besonderen durch die entsprechende Wahl des Polymers oder einer Polymermischung in ihren elastischen Eigenschaften über weite Bereiche einstellbare elastische Materialien. Dabei kann das gewählte Polymer beispielsweise auf Naturkautschukbasis, z.B. als Gummi, gebildet sein oder aber auch auf synthetischer Basis hergestellt.

Der Gurtabschnitt kann insbesondere aus einem textilen Material gebildet, insbesondere gewebt oder gewirkt sein. Er kann aber auch aus einem anderen Material, z.B. Leder, gebildet sein.

Weiterhin kann gemäß einer vorteilhaften Ausgestaltung der Erfindung die Auflage aus dem flexiblen Material durch Eingießen in oder Umgießen um das Material des Gurtabschnittes oder durch Einspritzen in bzw. Umspritzen um das Material des Gurtabschnittes hergestellt sein. Wird nämlich die Auflage aus dem flexiblen Material auf diese Weise hergestellt, indem der z.B. aus einem textilen Material gebildete, Gurtabschnitt in einer Werkzeugform in Wellen gelegt, dann ein verflüssigtes flexibles Material in die Werkzeugform eingebracht, insbesondere eingespritzt wird, so verbindet sich die Auflage gut mit dem Material des Gurtabschnitts und geht so die erfindungsgemäß erforderliche feste Verbindung mit dem Gurtabschnitt ein, um diesen in der Normalposition in den Wellenlinien bzw. der Wellenform zu halten.

Das elastische Material kann auf lediglich einer der beiden Hauptflächen des Gurtabschnittes angeordnet sein, ist jedoch gemäß einer vorteilhaften Weiterbildung der Erfindung auf beiden Hauptflächen des Gurtabschnittes angeordnet. Diese Ausgestaltung hat neben rein ästhetischen Effekten und Vorteilen auch den Vorteil, dass das Material des Gurtabschnittes unter der Auflage verborgen und dort geschützt ist.

Mit Vorteil ist die verdickte Auflage des elastischen Materials an dem Umkehrpunkten lediglich auf der konvexen Außenseite des Gurtabschnittes angeordnet. Mit anderen Worten wird, selbst bei einer Auflage aus dem elastischen Material auf beiden Hauptflächen des Gurtabschnittes der Zuwachs der Dicke in den Bereichen der Umkehrpunkte durch eine entsprechend dickere Ausgestaltung der Auflage des elastischen Materials auf der konvexen Außenseite erzielt. Durch diese Ausgestaltung können besonders eng gelegte Wellen erhalten werden, da auf der Innenseite keine diese überspannende Verdickung des Materials gegeben ist, die ansonsten zu einem "Zusammenwachsen" der Wellen in diesem Bereich führen würde. Die elastische Rückstellkraft des elastischen Materials wird hier also nicht durch eine Zugbelastung, sondern durch eine Druckbelastung (Kompression) erreicht, wenn die anliegende Kraft auch für eine Verformung des Gurtabschnittes mit dem darauf aufgebrachten elastischen Material in den Bereich der Umkehrpunkte, wo die Auflage aus dem elastischen Material am dicksten ausgebildet ist, führt.

Mit Vorteil kann bei dem erfindungsgemäßen Stoßdämpferelement weiterhin die Auflage aus dem elastischen Material über die gesamte Breite des Gurtabschnittes aufgebracht sein. Auch diese Maßnahme führt dazu, dass der Gurtabschnitt vollständig von dem elastischen Material bzw. der Auflage aus dem elastischen Material umgeben und somit nicht nur optisch verborgen, sondern auch weithin geschützt ist.

Wie bereits erwähnt, kann das Stoßdämpfungsverhalten des erfindungsgemäßen Stoßdämpfungselementes nicht allein durch die Wahl des elastischen Materials der Auflage und der Dicke der Auflage in der erfindungsgemäß vorzusehenden Variation dieser Dicke entlang des Verlaufes des in Wellenlinien gelegten Gurtabschnittes verändert werden, sondern auch durch die Anzahl der Wellen (eine Welle hat in dieser Betrachtung einen oberen und einen unteren Umkehrpunkt, also eine vollständige Wellenlänge). Je mehr derartige Wellen vorhanden sind, desto größer ist die mögliche Auslenkung und somit die Stoßdämpferwirkung in der Längsrichtung des Stoßdämpferelementes. Allerdings werden nicht allein aufgrund optischer Aspekte, sondern auch aufgrund eines lediglich beschränkt zur Verfügung stehenden Bauraumes obere Grenzen der Anzahl der Wellen gegeben sein, zumal auch eine Längenausdehnung des Stoßdämpferelementes und damit eine Längenveränderung des mit diesem versehenen Trageriemens beschränkt gehalten werden soll. In einer vorteilhaften Ausgestaltung weist der Gurtabschnitt zwei bis zehn je einen oberen und einen unteren Umkehrpunkt aufweisende Wellen auf, insbesondere drei bis sechs solcher Wellen. Dabei kann auch eine Zahl mit einer halben Welle gegeben sein, z.B. viereinhalb Wellen, so dass z.B. fünf obere, jedoch nur vier untere Umkehrpunkte gegeben sind.

Eine weitere vorteilhafte Weiterbildung der Erfindung besteht darin, dass auf dem Gurtabschnitt, unterhalb der Auflage ein in der Gurtlängsrichtung verlaufendes Verstärkungselement vorgesehen sein kann, bei dem es sich insbesondere um einen Metalldraht oder ein Metallseil, vorzugsweise einen Stahldraht oder ein Stahlseil handeln kann, und welches Verstärkungselement insbesondere mit dem Gurtabschnitt verbunden sein kann. Ein solches Verstärkungselement kann dabei unterschiedliche Aufgaben erfüllen. Zum einen kann es als weiterer "Stopp" gegen ein Überdehnen des Stoßdämpferelementes dienen, für den Fall dass dieses über eine von dem Gurtabschnitt abgefangene Belastungsgrenze hinaus gedehnt wird, um so zu verhindern, dass der Gurt etwa reißt. Zum anderen aber, und dies im Besonderen, kann ein solches Verstärkungselement als Schutz vor einem Durchtrennen des Stoßdämpferelementes und damit eines mit diesem ausgestatteten Trageriemens dienen, um insbesondere eine Diebstahlsicherung zu bilden für wertvolle, an dem Trageriemen befestigte Gegenstände (Handtaschen, Kameras oder dgl.).

Wie bereits eingangs erwähnt besteht ein weiterer Aspekt der Erfindung aus einem Trageriemen mit einem Stoßdämpferelement, wie es vorstehend beschrieben ist. Ein solcher Trageriemen macht von den oben bereits beschriebenen Vorteilen des Stoßdämpferelementes Gebrauch.

Ein solcher Trageriemen kann gemäß einer vorteilhaften Weiterbildung mit dem Stoßdämpferelement in einer solchen Weise integral verbunden sein, dass der Gurtabschnitt integraler Bestandteil des Trageriemens ist. Mit anderen Worten ist hier der Gurtabschnitt durch einen Längenabschnitt des Trageriemens gebildet, der in die Wellenform gelegt und mit der Auflage aus dem elastischen Material belegt ist, wobei diese Auflage aus dem elastischen Material mit sich verändernder Dicke in der erfindungsgemäßen, das Stoßdämpferelement bezeichnenden Weise gebildet ist.

Der erfindungsgemäße Trageriemen kann insbesondere als Kameratrageriemen ausgestaltet sein, wie dies bereits vorstehend erwähnt worden ist. Dabei kann das Stoßdämpferelement z.B. in einem sich an ein Schulterpolster anschließenden Bereich des Trageriemens angeordnet sein.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine dreidimensionale Ansicht eines erfindungsgemäßen Stoßdämpferelementes in einer möglichen Ausgestaltungsvariante;
- Fig. 2: eine Seitenansicht des Stoßdämpferelementes nach Fig. 1; und
- Fig. 3: eine Aufsicht auf das Stoßdämpferelement aus Fig. 1.

In den Figuren ist in schematischer Darstellung ein mögliches Ausführungsbeispiel eines erfindungsgemäßen Stoßdämpferelementes gezeigt, wie es als gesondertes Element zum, beispielsweise lösbaren, Anordnen an einem, bzw. Einbeziehen in einen Trageriemen, gebildet sein kann. Das Stoßdämpferelement ist in den Figuren allgemein mit dem Bezugszeichen 1 bezeichnet. Dieses Stoßdämpferelement 1 weist einen Gurtabschnitt 2 auf, der insbesondere ein integraler Bestandteil eines vollständigen Tragegurtes sein kann, aber auch ein gesonderter, in seiner Länge im Wesentlichen auf die Länge des Stoßdämpferelementes 1 beschränkter Gurtabschnitt 2. Dieser Gurtabschnitt 2 ist in einem Wellenabschnitt 3 in quer zu der Gurtlängsrichtung verlaufende Wellen gelegt, wobei der Gurtabschnitt 2 dort in quer zu der Längsrichtung L des Stoßdämpferelementes 1, in welcher Längsrichtung L das Stoßdämpferelement 1 stoßdämpfend wirkt, verlaufende Querabschnitte 5 gelegt ist und an zwischen diesen Querabschnitten 5 liegenden Umlenkpunkten 6 umgelenkt ist.

Auf den flexiblen, jedoch nicht zwingend elastischen, Gurtabschnitt 2 ist auf beiden einander gegenüberliegenden Hauptflächen jeweils eine Auflage 4 aus einem elastischem Material, insbesondere einem Polymermaterial, aufgebracht und mit dem Material des Gurtabschnittes 2 fest verbunden. Insbesondere kann der Gurtabschnitt 2 aus einem gewebten oder gewirkten Textil oder auch aus Leder oder einem anderen Material (z.B. Kunststoff) gebildet sein, kann dann die Auflage 4 aus dem elastischen Material, insbesondere Polymer, durch Umspritzen des Gurtmaterials des Gurtabschnittes 2 aufgebracht und mit dem Gurtabschnitt 2 fest verbunden sein. Diese Art der Aufbringung und Festlegung der Auflage 4 aus dem elastischen Material erfolgt in einer entsprechenden Form mit bereits in dem Wellenabschnitt 3 in die Wellenform gelegten Gurtabschnitt 2, so dass dann das elastische Material der Auflage 4 diese Form des Gurtabschnittes 2 und damit des Stoßdämpferelementes 1 in diesem Bereich 3 fixiert.

Durch die Elastizität des Materials der Auflage 4 kann das Stoßdämpferelement 1 in dem Wellenabschnitt 3 unter Streckung in der Längsrichtung L nachgeben und sich elastisch unter Ausbildung einer Rückstellkraft verformen. Hierdurch wird der stoßdämpfende Effekt erreicht.

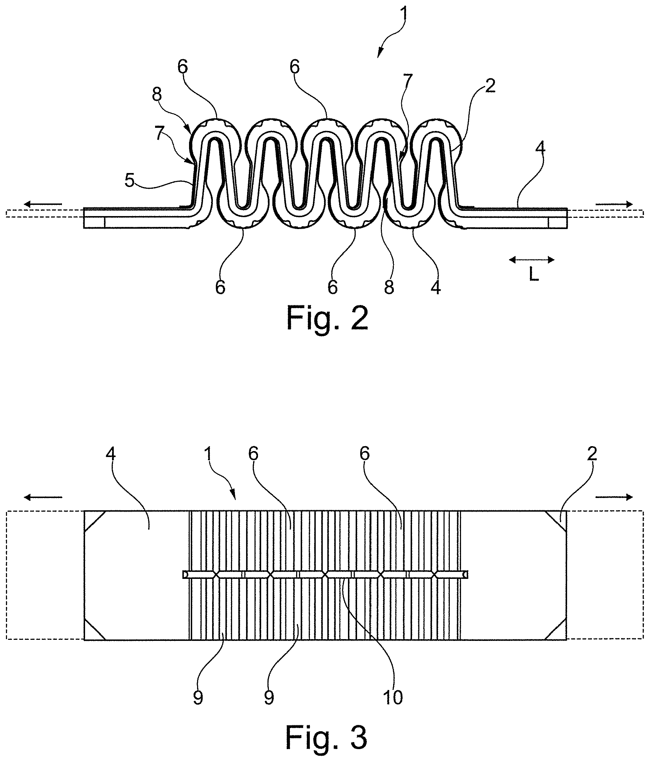

Das Besondere an dem Stoßdämpferelement 1 der Erfindung, wie es in dem in den Figuren dargestellten Ausführungsbeispiel gezeigt ist, ist nun, dass die (quer, insbesondere senkrecht zu den Hauptflächen des Gurtabschnitts 2 gesehene) Dicke der Auflage 4 aus dem elastischen Material entlang des Verlaufes des Gurtabschnittes 2 in dem Wellenabschnitt 3 variiert. Dabei ist die Auflage 4 aus dem elastischen Material in mittleren Abschnitten 7 der Querabschnitte 5 am dünnsten, steigt dann in sich anschließenden Abschnitten 8 in Richtung der Umkehrpunkte 6 an, ist an den Umkehrpunkten 6 am dicksten. Dies ist besonders gut in Fig. 2 zu erkennen. Durch diese Maßnahme wird erreicht, dass bei lediglich geringen in Richtung der Längsrichtung L wirkenden Zugkräften eine elastische Verformung des Stoßdämpferelementes 1 in dem Wellenabschnitt 3 lediglich durch Umbiegen im Bereich der mittleren Abschnitte 7 der Querabschnitte 5 erfolgt. Erst wenn die Zugkraft in der Längsrichtung L ansteigt, werden auch die Abschnitte 8 mit ansteigender Dicke der elastischen Auflage 4 in die Verformung und damit in die Wirkung des Abfangens eines Stoßes mit einbezogen. Erst bei größeren in der Längsrichtung L wirkenden Kräften verformt sich das Stoßdämpferelement 1 in dem Wellenabschnitt 3 schließlich auch in den Umkehrpunkten 6, wo die elastische Auflage 4 am dicksten und damit die für eine Verformung derselben aufzubringende Kraft am größten ist.

Durch diese Ausgestaltung von Bereichen mit definiert unterschiedlicher Federkraft wird gezielt die Möglichkeit geschaffen, bereits geringe Stoßkräfte abzufangen, indem eine Verformung lediglich im Bereich der mittleren Abschnitte 7 der Querabschnitte 5 erfolgt, zugleich aber auch hohe Stoßkräfte in Längsrichtung L abzufangen, in dem dann eine Verformung der Auflage 4 auch in den Abschnitten 8 mit ansteigender Dicke der Auflage 4 und in den Umlenkpunkten 6 hervorgerufen wird. In jedem Fall, d.h. bei einer Verformung nur in den mittleren Abschnitten 7 der Querabschnitte 5, bei einer Verformung auch der Abschnitte 8 mit zu den Umkehrpunkten 6 hin ansteigender Dicke der elastischen Auflage 4 oder aber auch einer Verformung im Bereich der Umkehrpunkte 6 selbst, erfolgt stets eine Längenveränderung, nämlich eine Ausdehnung, des Stoßdämpferelementes 1 in der Längsrichtung L unter Ausbildung einer entsprechend (mit der Verformung der einzelnen Abschnitte in der oben angegebenen Reihenfolge ansteigenden) Rückstellkraft. Hier wird also in einem einzigen Stoßdämpferelement 1 eine über einen weiten Bereich graduell gegebene Stoßdämpfungswirkung erzielt für geringe Lasten bis hin zu hohen Lasten, so dass entsprechend kleine Gewichte bis hin zu großen Gewichten mit ein und demselben Stoßdämpferelement 1 sicher getragen und im Hinblick auf die Dämpfung möglicher Stöße gesichert werden kann.

Wie in Fig. 2 ferner zu erkennen ist, ist die elastische Auflage 4 in den Umkehrpunkten mit ihrer jeweiligen Verdickung auf der konvex geformten Außenseite der Umkehrpunkte aufgebracht, auf der konkav geformten Innenseite ist die Auflage minimal dünn, unterscheidet sich in ihrer Dicke nicht von derjenigen im mittleren Abschnitt 7 des Querabschnittes 5. Durch diese Maßnahme wird erreicht, dass in den Umkehrpunkten 6 der Gurtabschnitt 2 in sehr eng zusammenstehende Wellen mit Umlenkungen von nahe an 180° gelegt werden können, ohne dass die dadurch entstehenden engen Spalten etwa durch die verdickte Auflage 4 aus dem elastischen Material gefüllt oder überbrückt werden würden. So lässt sich ein kompaktes und dennoch hoch wirksames Stoßdämpferelement 1 verwirklichen.

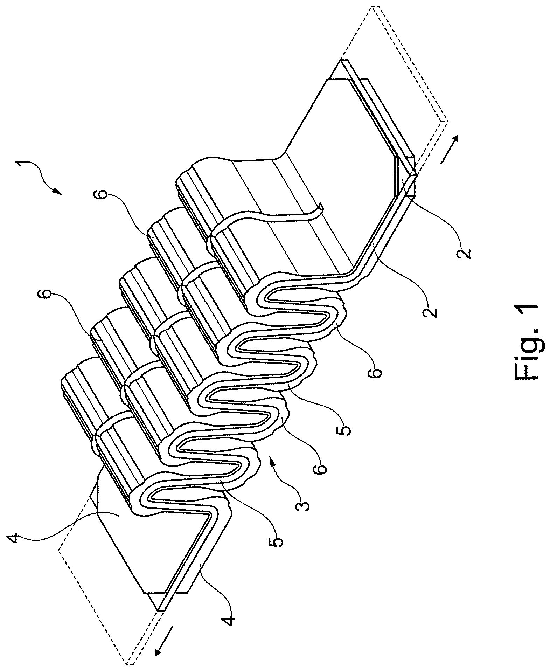

Wie den Figuren 1 und 3 besonders gut zu entnehmen ist, ist die Auflage 4 aus dem elastischen Material nicht nur auf beiden Hauptflächen des Gurtabschnittes 2 aufgebracht, sondern erstreckt sich auch über dessen gesamte Breite. Zudem kann in den Figuren 1 und insbesondere 3 erkannt werden, dass im Bereich der Umkehrpunkte 6 Querstrukturen 9 in Form von Quernuten und Querrippen ausgebildet sind. Weiterhin läuft über den Wellenabschnitt 3 in der Gurtlängsrichtung und damit den Wellen folgend eine in etwa mittig angeordnete Längsrippe 10. Diese Strukturen der Querstruktur 9 und Längsrippe 10 können zwar so ausgebildet sein, dass sie z.B. als bewusste Schwächung der Auflage 4 im Bereich der Umlenkpunkte 6 (durch die Querstrukturen 9) eine technische Wirkung haben, sind aber hier lediglich als gestalterische Elemente angebracht.

Die Längsrippe 10 gibt dabei für den Betrachter optisch die Anordnung eines in den Figuren nicht näher dargestellten, bei dem Ausführungsbeispiel jedoch bevorzugt vorhandenen Stahlseils wieder, welches auf dem Gurtabschnitt 2 in Gurtlängsrichtung angebracht und mit dem Gurtabschnitt 2 verbunden ist und unterhalb der elastischen Auflage 4 verborgen liegt. Dieses Stahlseil dient dabei einerseits als zusätzliches Stoppelement gegen eine Überdehnung des Stoßdämpferelementes 1 in der Längsrichtung L, insbesondere aber auch als Diebstahlssicherung, indem es ein Durchtrennen des Stoßdämpferelementes 1 verhindert.

Das wie in den Figuren dargestellte Stoßdämpferelement 1 kann bevorzugt integral in einem Trageriemen ausgebildet sein, indem der Trageriemen selbst mit einem Abschnitt den Gurtabschnitt 2 bildet, auf dem die Auflage 4 aus dem elastischen Material aufgebracht ist. Ein solcher Trageriemen kann insbesondere als Kameratrageriemen ausgebildet sein.

### Bezugszeichenliste

- 1: Stoßdämpferelement
- 2: Gurtabschnitt
- 3: Wellenabschnitt
- 4: elastische Auflage
- 5: Querabschnitt
- 6: Umkehrpunkt
- 7: mittlerer Abschnitt
- 8: Abschnitt mit ansteigender Dicke der elastischen Auflage
- 9: Querstruktur
- 10: Längsrippe

- L: Längsrichtung

## Patentansprüche

1. In einer Längsrichtung (L) wirksames Stoßdämpferelement (1) für Trageriemen mit einem flexiblen, flachen, zwei einander gegenüberliegende Hauptflächen aufweisenden, in einer Gurtlängsrichtung verlaufenden Gurtabschnitt (2), der in der Gurtlängsrichtung in quer zu der Längsrichtung (L) ausgelenkten Wellenlinien (3) mit Umkehrpunkten (6) und zwischen den Umkehrpunkten (6) verlaufenden Querabschnitten (5) verläuft, und mit einer auf wenigstens eine der Hauptflächen des Gurtabschnittes (2) aufgebrachten, mit dem Gurtabschnitt (2) fest verbundenen, den Gurtabschnitt (2) in einer Normalposition in den Wellenlinien (3) haltenden Auflage (4) aus einem elastischen Material, **dadurch gekennzeichnet, dass** die Auflage (4) aus dem elastischen Material im Verlauf der Wellenlinien (3) eine variierende Dicke aufweist, wobei auf den Querabschnitten (5) des Gurtabschnittes (2) in einem mittleren Abschnitt (7) die Auflage (4) die geringste Dicke aufweist, ausgehend von dem mittleren Abschnitt (7) hin zu den Umkehrpunkten (6) die Dicke ansteigt und in den Umkehrpunkten (6) die Auflage (4) aus dem elastischen Material am dicksten gebildet ist.

2. Stoßdämpferelement (1) nach Anspruch 1, **dadurch gekennzeichnet, dass** die Auflage (4) aus dem elastischen Material aus einem Polymer gebildet ist.

3. Stoßdämpferelement (1) nach eine der vorhergehenden Ansprüche, **dadurch gekennzeichnet, dass** der Gurtabschnitt (2) aus einem textilen Material gebildet, insbesondere gewebt oder gewirkt, ist.

4. Stoßdämpferelement (1) nach einem der vorhergehenden Ansprüche, **dadurch gekennzeichnet, dass** der Gurtabschnitt aus Leder gebildet ist.

5. Stoßdämpferelement (1) nach einem der vorhergehenden Ansprüche, **dadurch gekennzeichnet, dass** die Auflage (4) aus dem flexiblen Material durch Eingießen oder Einspritzen in den Gurtabschnitt (2) oder durch Umgießen oder Umspritzen des Gurtabschnitts (2) hergestellt und an dem Gurtabschnitt (2) festgelegt ist.

6. Stoßdämpferelement (1) nach einem der vorhergehenden Ansprüche, **dadurch gekennzeichnet, dass** die Auflage (4) aus dem elastischen Material auf beiden Hauptflächen des Gurtabschnittes (2) angeordnet ist.

7. Stoßdämpferelement (1) nach einem der vorhergehenden Ansprüche, **dadurch gekennzeichnet, dass** die verdickte Auflage (4) des elastischen Materials an den Umkehrpunkten (6) auf der konvexen Außenseite des Gurtabschnittes (2) angeordnet ist.

8. Stoßdämpferelement (1) nach einem der vorhergehenden Ansprüche, **dadurch gekennzeichnet, dass** die Auflage (4) aus dem elastischen Material über die gesamte Breite des Gurtabschnittes (2) aufgebracht ist.

9. Stoßdämpferelement (1) nach einem der vorhergehenden Ansprüche, **dadurch gekennzeichnet, dass** der Gurtabschnitt (2) in 2 bis 10 je einen oberen und einen unteren Umkehrpunkt (6) aufweisende Wellen, insbesondere in 3 bis 6 solcher Wellen, gelegt ist

10. Stoßdämpferelement (1) nach einem der vorhergehenden Ansprüche, **dadurch gekennzeichnet, dass** auf dem Gurtabschnitt (2), unterhalb der Auflage (4) ein in der Gurtlängsrichtung verlaufendes Verstärkungselement, insbesondere ein Metalldraht oder -seil, vorzugsweise ein Stahldraht oder - seil angeordnet, insbesondere mit dem Gurtabschnitt (2) verbunden, ist.

11. Trageriemen mit einem Stoßdämpferelement (1) nach einem der vorhergehenden Ansprüche.

12. Trageriemen nach Anspruch 11, **dadurch gekennzeichnet, dass** der Gurtabschnitt (2) integraler Bestandteil des Trageriemens ist.

13. Trageriemen nach einem der Ansprüche 11 oder 12, **dadurch gekennzeichnet, dass** er als Kameratrageriemen ausgestaltet ist.

## Claims

1. A shock absorber element (1) efficient in a longitudinal direction (L) for a carrying strap, fitted with a flexible, flat belt section (2) extending in a longitudinal direction of the belt, comprising two main surfaces opposite to each other, which belt section extends in the longitudinal direction of the belt in waves lines (3) deflected perpendicular to the longitudinal direction (L) with turning points (6) and perpendicular sections (5) extending between the turning points (6), and with a support (4) made of plastic material, mounted on at least one of the main surfaces of the belt section (2), rigidly connected to the belt section (2) and holding the belt section (2) in a normal position in the wave lines (3), **characterised in that** the support (4) made of said plastic material has a varying thickness along the wave lines (3), whereas the support (4) has the smallest thickness on the perpendicular sections (5) of the belt section (2) in a middle section (7), whereas the thickness increases starting from the middle section (7) up to the turning points (6) and whereas in the turning points (6) the support (4) made of elastic material is the thickiest.

2. A shock absorber element (1) according to claim 1, **characterised in that** the support (4) made of said elastic material consists of a polymer.

3. A shock absorber element (1) according to one of the previous claims, **characterised in that** the belt section (2) is made of a textile material, in particular woven or knitted.

4. A shock absorber element (1) according to one of the previous claims, **characterised in that** the belt section is made of leather.

5. A shock absorber element (1) according to one of the previous claims, **characterised in that** the support (4) made of said flexible material is made by casting or spaying into the belt section (2) or by casting or spraying around the belt section (2) and fixed to the belt section (2).

6. A shock absorber element (1) according to one of the previous claims, **characterised in that** the support (4) made of said elastic material is arranged on both main surfaces of the belt section (2).

7. A shock absorber element (1) according to one of the previous claims, **characterised in that** the thickened support (4) of the elastic material is arranged on the turning points (6) on the convex external side of the belt section (2).

8. A shock absorber element (1) according to one of the previous claims, **characterised in that** the support (4) made of said elastic material is mounted over the whole width of the belt section (2).

9. A shock absorber element (1) according to one of the previous claims, **characterised in that** the belt section (2) is laid in 2 to 10 waves each having a top turning point and a bottom turning point (6), in particular in 3 to 6 such waves

10. A shock absorber element (1) according to one of the previous claims, **characterised in that** a reinforcing element extending on the belt section (2), below the support (4) in the longitudinal direction of the belt, in particular a metal wire or rope, preferably a steel wire or rope, in particular connected to belt section (2).

11. A carrying strap with a shock absorber element (1) according to one of the previous claims,

12. A carrying strap according to claim 11, **characterised in that** the belt section (2) is an integral part of the carrying strap.

13. A carrying strap according to one of the claims 11 or 12, **characterised in that** it is shaped as a camera carrying strap.

## Revendications

1. Elément amortisseur (1) efficace dans le sens longitudinal (L) pour sangle de transport, équipé d'un brin de section souple, plat (2) s'étendant dans une direction longitudinale de la courroie, comprenant deux surfaces principales l'une en face de l'autre, lequel brin de section s'étend dans la direction longitudinale de la courroie par lignes ondulées (3) déviées perpendiculairement à la direction longitudinale (L) avec des points de retournement (6) et des sections perpendiculaires (5) s'étendant entre les points de retournement (6), et avec un support (4) en matière plastique, monté sur au moins l'une des faces principales de la courroie (2), solidaire de la section de la courroie (2), fixée à demeure sur la section de la courroie (2) dans une position normale dans les lignes ondulées (3), **caractérisé en ce que** le support (4) fait dudit matériau plastique présente une épaisseur variable le long des lignes ondulées (3), où le support (4) présente la plus petite épaisseur sur les sections perpendiculaires (5) du brin de section (2) dans une section médiane (7), où l'épaisseur augmente à partir de la section médiane (7) jusqu'au points de retournement (6) et où dans les points de retournement (6) le support (4) en matériau élastique est le plus épais.

2. Elément amortisseur (1) selon la revendication 1, **caractérisé en ce que** le support (4) en matériau élastique se compose d'un polymère.

3. Elément amortisseur (1) selon l'une quelconque des revendications précédentes, **caractérisé en ce que** le brin de courroie (2) est constitué d'une matière textile, en particulier tissée ou tricotée.

4. Elément amortisseur (1) selon l'une quelconque des revendications précédentes, **caractérisé en ce que** le brin de section est en cuir.

5. Elément amortisseur (1) selon l'une quelconque des revendications précédentes, **caractérisé en ce que** le support (4) en matériau souple est réalisé par coulage ou pulvérisation dans le brin de section (2) ou bien par coulage ou pulvérisation autour du brin de section (2) et fixé au brin de courroie (2).

6. Elément amortisseur (1) selon l'une quelconque des revendications précédentes, **caractérisé en ce que** le support (4) en matériau plastique est disposé sur les deux surfaces principales des lignes ondulées (2).

7. Elément amortisseur (1) selon l'une quelconque des revendications précédentes, **caractérisé en ce que** le support épaissi (4) du matériau élastique est disposé sur les points de retournement (6) sur la partie convexe externe du brin de section (2).

8. Elément amortisseur (1) selon l'une quelconque des revendications précédentes, **caractérisé en ce que** le support (4) en matériau plastique est monté sur toute la largeur du brin de section (2).

9. Elément amortisseur (1) selon l'une quelconque des revendications précédentes, **caractérisé en ce que** le brin de courroie (2) est constitué de 2 à 10 ondulations ayant chacun un haut point tournant et un bas point tournant (6), en particulier dans 3 à 6 telles ondes

10. Elément amortisseur (1) selon l'une quelconque des revendications précédentes, **caractérisé en ce qu'**un élément d'armature s'étendant sur le brin de courroie (2), au-dessous du support (4) dans le sens longitudinal de la courroie, en particulier un fil ou une corde métallique, de préférence un câble ou une corde en acier, en particulier connecté au brin de courroie (2).

11. Sangle de transport avec élément amortisseur (1) selon l'une quelconque des revendications précédentes.

12. Sangle de transport selon la revendication 11, **caractérisée en ce que** le brin de courroie (2) fait partie intégrante de la sangle de transport.

13. Sangle de transport selon l'une des revendications 11 ou 12, **caractérisée en ce qu'**elle est conformée en sangle de transport pour caméra.
